# EUROPÄISCHE PATENTSCHRIFT

(11) **EP 1 314 642 B1**
(45) Veröffentlichungstag und Bekanntmachung des Hinweises auf die Patenterteilung: **05.01.2005**
(21) Anmeldenummer: 02023846.5
(22) Anmeldetag: 24.10.2002
(51) Int. Cl.: B64C 9/24, B64C 21/04, B64C 23/00, B64D 15/04, B64C 3/46, B64C 21/10, B64C 23/06

(54) **Anordnung zur Minderung des aerodynamischen Lärms an einem Vorflügel eines Verkehrsflugzeuges**
Arrangement to reduce the noise generated by aircraft leading edge flaps
Dispositif pour réduire le bruit produit par des volets de bord d'attaque d'un aéronef

(30) Priorität: 24.11.2001 DE 10157849
(43) Veröffentlichungstag der Anmeldung: 28.05.2003
(73) Patentinhaber: Airbus Deutschland GmbH, 21129 Hamburg (DE); Deutsches Zentrum für Luft- und Raumfahrt e.V., 51147 Köln (DE)
(72) Erfinder: Mau, Knut, Dipl.-Ing., 22339 Hamburg (DE); Dobrzynski, Werner, Dipl.-Ing., 38302 Wolfenbüttel (DE)
(74) Vertreter: Hansmann, Dierk, Dipl.-Ing.

(56) Entgegenhaltungen:
- EP-A- 1 149 761
- DE-A- 10 019 185
- DE-A- 19 925 560
- DOBRZYNSKI W ET AL: "AIRFRAME NOISE STUDIES ON WINGS WITH DEPLOYED HIGH-LIFT DEVICES" AIAA AEROACOUSTICS CONFERENCE, XX, XX, 2. Juni 1998 (1998-06-02), Seiten 1-17, XP001084583

## Beschreibung

Die Erfindung bezieht sich auf eine Anordnung zur Minderung des aerodynamischen Lärms an einem Vorflügel eines Verkehrsflugzeuges gemäß dem Oberbegriff des Anspruchs 1. Mit ihr wird der aerodynamische Lärm an Vorflügeln bei (modernen) Verkehrsflugzeugen reduziert, der während des Start- und Landeanfluges durch Luftumströmung des Vorflügel-Profiles induziert wird.

Moderne Verkehrsflugzeuge bedienen sich während der Start- und Landephase sogenannter Hochauftriebshilfen, um bei geringen Fluggeschwindigkeiten den erforderlichen Auftrieb zu erzeugen. Diese Flugzeugkomponenten, unterteilt in Vorflügel und Landeklappen, welche sich beweglich an einen Hauptflügel anlenken und diesem ausfahren lassen, sind neben den Fahrwerken die hauptsächlichsten Erzeuger des Umströmungslärms von Verkehrflugzeugen. So werden beispielsweise zur Steigerung des Auftriebs bei reduzierter Geschwindigkeit im Landeanflug Vorflügel und Landeklappen ausgefahren. Da bei den heutigen Verkehrsflugzeugen in der Regel Vorflügel vom Typ: handley page slat" eingesetzt werden, entsteht bei dieser Bauweise zwischen dem Vorflügel und dem Hauptflügel ein Spalt, dessen Durchströmung zur gewollten Steigerung des Auftriebs erforderlich ist, jedoch zu erhöhter Lärmerzeugung führt. Dieser Lärm kann während des Landeanfluges, wenn die Triebwerke stark gedrosselt sind, die Größenördnung des Triebwerkslärms erreichen.

Dass die Fachwelt sich ernsthaft mit vorzusehenden Verbesserungen der Lärmminderung einer umströmten Flugzeugstruktur, insbesondere an der Tragwerkstruktur im Vorflügelbereich, befasst, darüber geben Erkenntnisse aus Arbeiten eines Luftfahrtforschungsprogramms der Bundesrepublik Deutschland entsprechende Auskunft, die sich mit der Reduzierung des von Hochauftriebshilfen ausgehenden Lärms befassen. Ergebnisse aus durchgeführten Versuchsreihen offenbaren, dass der Vorflügel einen höheren Anteil zum Gesamtlärm beiträgt - als derjenige einer Landeklappe. Weitgehende Untersuchungen identifizierten einen ausgeprägten gefangenen Wirbel" auf der rückwärtigen konkav gewölbten (flügelangelenkten) Innenseite des Vorflügels als potentielle Geräuschquelle. Die Lärmentstehung wird derweise verständlich, wonach auf genannter Innenseite im ausgefahrenen Zustand des Vorflügels eine Strömungsablösung der Spaltströmung zwischen Vorflügel und Hauptflügel in Form des gefangenen Wirbels entstehen wird. Dieser Wirbel wird über die vorflügelnahe angrenzende Spaltströmung ständig mit Energie versorgt. Über die Trennstromlinie zwischen dem Wirbelstromgebiet und der Spaltströmung gelangen kontinuierlich Turbulenzballen in die beschleunigte Spaltströmung, wodurch der Lärm entsteht, insbesondere durch Abströmung der Turbulenzballen über die Oberkante (obere Abströmkante) respektive obere Vorflügelhinterkante des Vorflügels.

Auch eine vom American Institute of Aeronautics and Astronautics" publizierte Studie der Herren Dobrzynski und Gehlhar [Dr. Werner Dobrzynski, Burkhard Gehlhar: "Airframe Noise Studies on Wings with Deployed High-Lift Devices"; Deutsches Zentrum für Luft und Raumfahrt e. V. (DLR), Institut für Entwurfsaerodynamik, Abteilung Technische Akustik, Forschungszentrum Braunschweig, Germany; 4th AIAA/CEAS Aeroacoustics Conference; June 2-4, 1998 / Toulouse, France] befasst sich mit der Lärmentstehung und Lärmverhinderung am ausgefahrenen Vorflügel eines Flugzeuges. In dieser Studie wird unter anderem auf eine Lösung eingegangen, nach der am Innenbereich (am rückwärtigen Profilbereich) eines Vorflügels, der sich in Richtung des Hauptflügels aufspannt, strömungseinwärts der Profilwölbung ein vorflügelbefestigtes Leitblech (gelenkbeweglich) angeordnet ist, das (sinnvollerweise) an den Vorflügel angelenkt und eingeschwenkt wird. Durch diese Maßnahme verspricht man sich, den Geräuschpegel während des Starts und der Landung eines Flugzeuges zu verringern. Für den Reiseflug des Flugzeuges wird dann das Leitblech an den Vorflügel angelenkt. Es mag sein, dass man entsprechende Geräuschminderungen im Windkanal erfolgreich nachweisen kann, allerdings wird diese Lösung nach praktischen Erwägungen wohl kaum verwendet werden, weil sie so nicht umsetzbar ist. Im eingefahrenen Zustand des Vorflügels (Reisekonfiguration) mit entsprechend dem rückwärtigen Profilbereich (nach innen) geklapptem Leitblech ist kein ausreichender Platz vorhanden, um eine starre Konfiguration zu verstauen. Andererseits weist eine derartige flexible Trennfläche, die sich beim Einfahren der Innenkontur des Vorflügels anpasst, dann nicht genügend Festigkeit auf, um den durch die Luftströmung verursachten Kräften standzuhalten. Von daher wird Flatterneigung mit dem Effekt einer Geräuschabstrahlung auftreten, die dem beabsichtigten Zweck entgegensteht. Ein angelenktes Leitblech wird zusätzliche mechanische bewegliche Teile erfordern, wodurch neben dem Anwachsen der Herstellungs- und Wartungskosten auch Gewichtserhöhungen auftreten werden. Der Übergang von der Vorflügelunterseite zu dem Gelenk der Trennfläche muss frei von Kontursprüngen und Schlitzen ausgebildet sein, wodurch sehr hohe Fertigungsgenauigkeiten erforderlich sind. Ferner wird die vorgeschlagene Blech-Trennfläche erheblichen Wechselkräften, die von der Luftströmung initiiert werden, ausgesetzt sein. Da diese Trennfläche lediglich an der Unterkante des Vorflügels über das Gelenk befestigt wird und keine weiteren Versteifungen vorgesehen werden, besteht die Gefahr, dass diese Trennfläche zu Schwingungen angeregt wird. Da die Kontur der Slatrückseite wie auch die Geometrie des Luftspaltes sich über die Spannweite der Tragfläche ändert, müssten die Elemente dieser Trennfläche eine Verwindung / Schrägung bekommen, wodurch der Einklappmechanismus zusätzlich verkompliziert wird. Sehr kritisch wird die Situation eines Fehlerfalles, beispielsweise bei Blockade der Mechanik, bewertet, weil sich dann der Vorflügel nicht mehr einfahren lässt.

Weil auch keine weiteren Hinweise oder Anregungen zum Abstellen dieser Nachteile (auch nicht andeutungsweise) vermittelt werden oder auf etwa weitere Verbesserungen (wenigstens andeutungsweise) hingewiesen wird, nach denen eine Geräuschminderung am Vorflügel durch anderweitige strömungsbegünstigende Maßnahmen, die gänzlich auf zusätzliche sich bewegende mechanische Elemente verzichten würden und außerdem eine optimale Anpassung an verschiedene Flugzustände umsetzen würden, erreicht wird, kann man bestenfalls die vorgeschlagene Lösung als Anregung zum Auffinden von verbesserten Lösungen auffassen, nach denen der Anteil des Vorflügellärms am Gesamtlärm von umströmten Flugzeugstrukturen der Verkehrsflugzeuge signifikant reduziert und in eine technisch und wirtschaftlich befriedigende Gesamtlösung umgesetzt wird.

Auch die DE 199 25 560 A1, welche als nächstliegender Stand der Technik betrachtet wird und alle Merkmale des Oberbegrifs des unabhängigen Anspruchs offentbart, schlägt vor, durch das Einbringen einer massiven vorflügelbeweglichen Trennfläche, bspw. mittels einem geformten Blech, entlang der Trennstromlinie zwischen dem vorher erwähnten gefangenen Wirbel an der konkav gewölbten Innenseite des Vorflügels und der Spaltströmung die vorgenannte(n) Strömungslärmquelle(n) zu minimieren, wobei die vorgenannten Nachteile, auf die hinsichtlich der vorerwähnten Studie aufmerksam gemacht wird, gleichermaßen zutreffen. Außerdem besteht die Gefahr, dass durch das Abdecken der konkav gewölbten Innenseite des Vorflügels ein Resonanzvolumen gebildet wird, wodurch es zur erhöhten Lärmabstrahlung kommen kann. Sofern das-geformte Blech, dass an der Innenseite des ausgefahrenen Vorflügels eingangs der Spaltströmung beweglich gelagert wird, nicht vollständig diese Vorflügel-Innenseite und damit den gefangenen Wirbel abschottet, kann man davon ausgehen, dass an der Endkante des Bleches die (den Luftspalt passierende) Spaltströmung abreißen wird, wodurch die abgeschottete Luft (des gefangengehaltenen Wirbels) zu Schwingungen (Resonanzschwingungen) angeregt wird, die man als tieffrequenten Ton wahrnehmen wird.

Ferner ist aus der DE 100 19 185 A1 eine Anordnung zur Minderung des aerodynamischen Lärms von Vorflügeln eines Verkehrsflugzeuges, bei der der zitierte Innenbereich des Vorflügels, der beweglich an einen Hauptflügel angelenkt oder diesem ausgefahren wird, eine der Außenkontur des Hauptflügels angepasste Profilwölbung aufweist, welche in Vorflügel-Spannweitenrichtung die Form einer Hohlkehle besitzt. Diese Anordnung umfasst einen innerhalb der Profilwölbung an der gewölbten Profiloberfläche befestigten hohlen Verdrängungskörper, der ohne weitere Zwangsführung durch Anlenkung (von) weiterer(en) aerodynamischer(en) Körper(n) innerhalb dem von der Profilwölbung eingeschlossenen Raum positioniert ist. Der Verdrängungskörper ist mit wenigstens einer geregelten Bleed-Air-Leitung, die im Hohlraum des Vorflügels abschnittsweise angeordnet ist, verbunden. Ungeachtet dessen, dass der Verdrängungskörper auch aufgrund von Alterungserscheinungen und auf ihn einwirkenden Umweltbelastungen etwaigen Verschleißerscheinungen unterliegen wird, setzt seine Funktion eine Störeinflüssen unterliegende Verbindung mit einem aufwendigen Steuerungssystem und eine Anbindung an andere Flugzeugsysteme (Datenbus, Druckluft) zu dessen Betätigung voraus, falls man den ungewünschten Lärmanteil am Vorflügel mindern möchte.

Demzufolge liegt der Erfindung die Aufgabe zugrunde, eine Anordnung zur Minderung des aerodynamischen Lärms an einem Vorflügel eines Verkehrsflugzeuges bereitzustellen, mit der ohne erheblichen Aufwand am Vorflügel eine lärmmindernde Wirkung umgesetzt wird, ohne dass die aerodynamischen Verhältnisse (Auftrieb, Widerstand) sich nachteilig verändern. Bei einem Ausfall der Anordnung dürfen keinesfalls gefährdende Auswirkungen, die den Flug eines Verkehrsflugzeuges beeinflussen, auftreten. Dabei soll weitestgehend auf zusätzliche sich bewegende mechanische Elemente und auf Elemente, die das Gesamtgewicht des Flugzeuges ungünstig beeinflussen, verzichten werden, wobei eine einfache Installation der (als Nachrüstlösung vorzusehenden) Anordnung und deren einfache Wartbarkeit angestrebt wird.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung ist in einem Ausführungsbeispiel anhand der beigefügten Zeichnungen näher beschrieben. Es zeigen
- Fig. 1: die Anordnung zur Minderung des aerodynamischen Lärms an einem dem Hauptflügel ausgefahrenen Vorflügel und mit letzteren an der Unterkante angeordneter Trennfläche;
- Fig. 2: die Anordnung nach Fig. 1 mit einer aus mehreren seriell angeordneten Bürstenhaaren zusammengesetzten und eine Trennfläche bildende Bürstenhaarreihe;
- Fig. 3: die Anordnung zur Minderung des aerodynamischen Lärms an einem dem Hauptflügel ausgefahrenen Vorflügel und mit letzteren an der Oberkante angeordneter Trennfläche;
- Fig. 4: die Anordnung nach Fig. 3 mit einer aus mehreren seriell angeordneten Bürstenhaaren zusammengesetzten und eine Trennfläche bildende Bürstenhaarreihe;
- Fig. 5: eine Diagramm-Darstellung der Schallquellverteilung in einem Schnitt eines Tragflügels mit orginalem Vorflügel und eines mit Bürstenhaaren versehenen Vorflügels in Abhängigkeit der Vorflügelposition bei einer Schall-Frequenz von 2,5 KHz;
- Fig. 6: die Diagramm-Darstellung nach Fig. 5 bei einer Schall-Frequenz von 3,15 KHz;
- Fig. 7: die Diagramm-Darstellung nach Fig. 5 bei einer Schall-Frequenz von 4,0 KHz;
- Fig. 8: die Diagramm-Darstellung nach Fig. 5 bei einer Schall-Frequenz von 5,0 KHz;
- Fig. 9: die Stromlinien für die Anordnung eines dem Hauptflügel ausgefahrenen orginalen Vorflügels ohne die Anordnung zur Minderung des aerodynamischen Lärms nach den Figuren 1 bis 4.

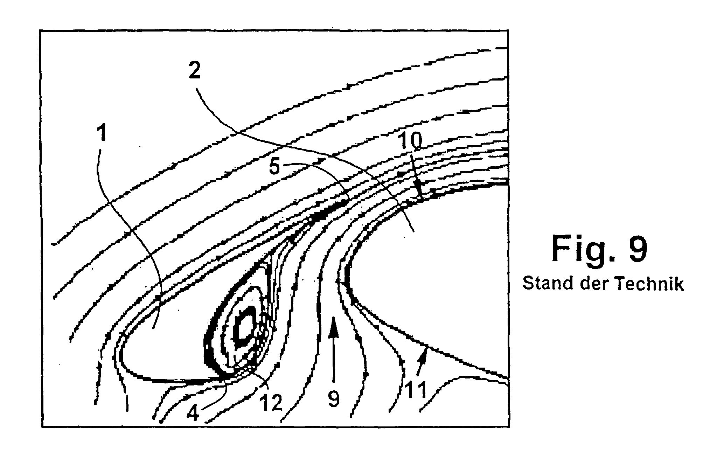

Um das Verständnis für die Situation der Lärmentstehung an einem umströmten Vorflügel 1, der dem Hauptflügel 2 eines Verkehrsflugzeuges ausgefahren ist, zu fördern, wird zunächst auf die Anordnung nach der Fig. 9 näher eingegangen. In dieser Darstellung wird - ergänzend der einleitenden Ausführungen hinsichtlich dieser Konfiguration - der Verlauf der Luftströmung um diesen orginalen Vorflügel 1 im ausgefahrenen Zustand (während der Start- und Landephase des Verkehrsflugzeuges) deutlich hervorgehoben. Interessant für den Betrachter mag die Tatsache erscheinen, dass weitgehende Untersuchungen auf der konkaven Innenseite des Vorflügels 1 einen "gefangenen Luftwirbel 12" als potentielle Geräuschquelle identifizierten, der als sogenannte Wirbelwalze ausgebildet ist und einen Teil des störenden Gesamtlärms ausmacht. Aufgrund der räumlichen Ausdehnung dieses Effekts über die gesamte Spannweite dieser Tragfläche handelt es sich hierbei um eine hoch wirksame Schallquelle, deren Geräuschpegel es zumindestens verträglich zu mindern gilt. Um etwaigen Missverständnissen vorzubeugen - wird noch ergänzt, dass die Oberfläche der Innenseite des Vorflügels 1 einen konkav gewölbten Innenbereich darstellt, welcher der Außenkontur des Hauptflügels 2 angepasst ist, wobei dieser Innenbereich in Vorflügel-Spannweitenrichtung die Form einer Hohlkehle besitzt.

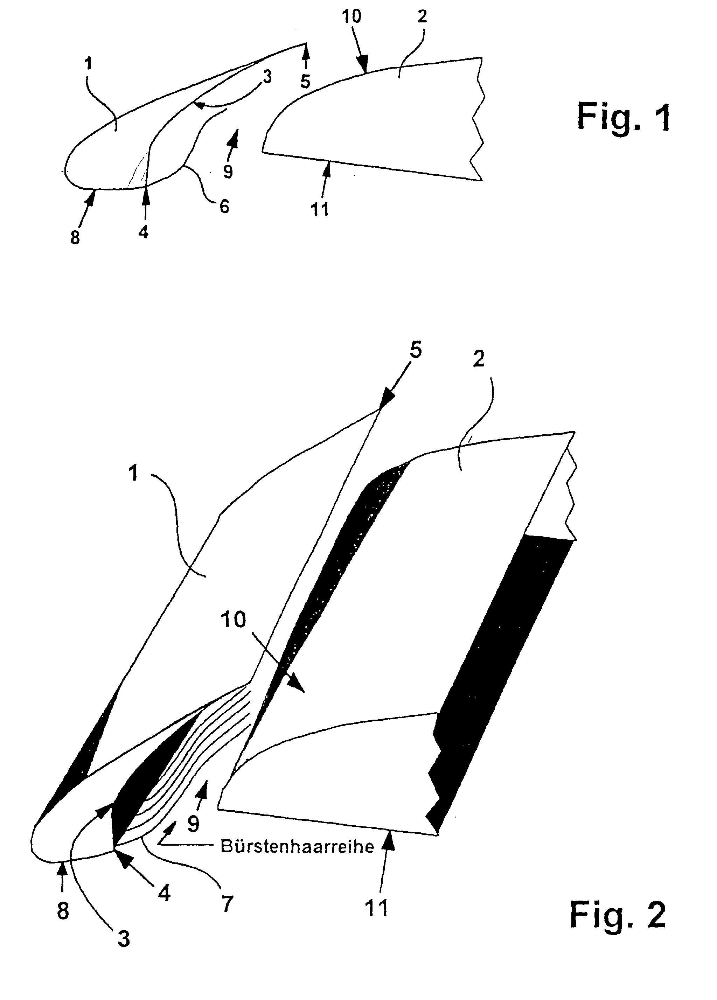

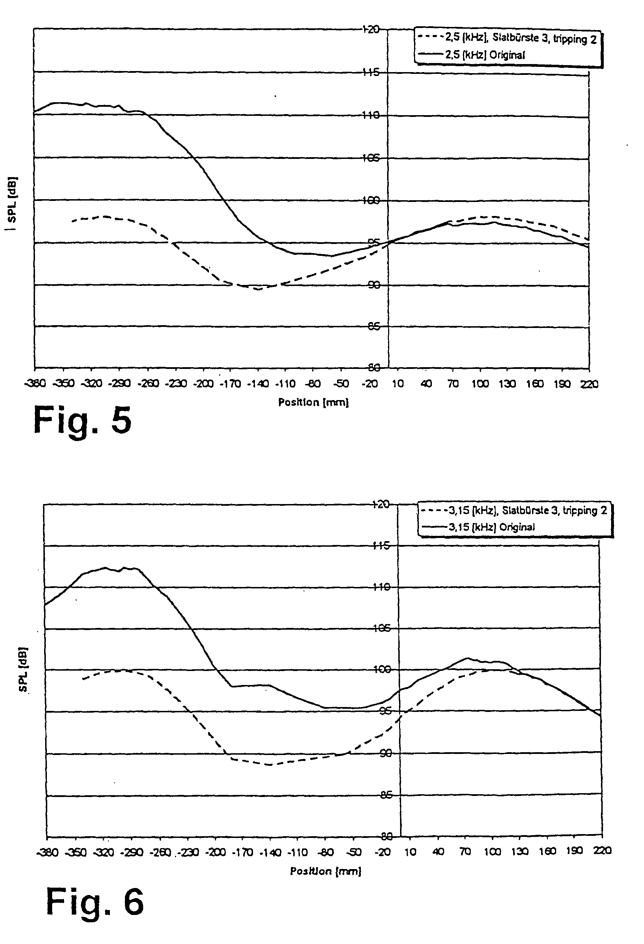

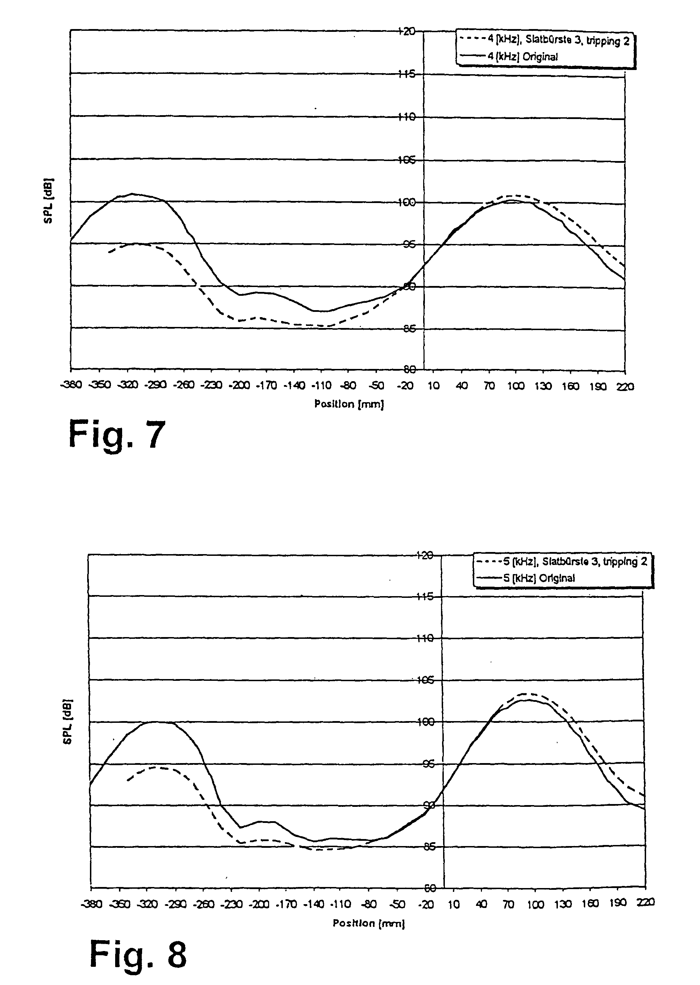

Anknüpfend an die einleitend diskutierten Vorstellungen zur Lärmbeseitigung am Vorflügel 1 wird in den Figuren 1 bis 4 ein wesentlich einfacheres Lösungskonzept vorgeschlagen, dessen experimentell im Windkanal bestätigter Erfolg man anhand der Figuren 5 bis 8 nachvollziehen kann.

Aus den Figuren 1 bis 4 kann man ersehen, dass man zur Bewältigung der am Vorflügel 1 realisierten Lärmminderung eine Trennfläche 6 einsetzt, die aus mehreren seriell angeordneten Bürstenhaaren 7 zusammengesetzt ist, welche mit einer in Vorflügel-Spannweitenrichtung angeordneten Bürstenhaarreihe umgesetzt wird.

Sofern nun auf der (konkav gewölbten) Rückseite des Vorflügels 1 - wie nach Fig. 9 vorgesehen - keine Trennfläche 6 installiert wird, entsteht im ausgefahrenen Zustand des Vorflügels 1 eine Strömungsablösung der (durch den Spaltbereich 9 strömenden) Spaltströmung zwischen dem Vorflügel 1 und dem Hauptflügel 2 in Form des ausgeprägten (gefangenen) Luftwirbels 12. Dieser Luftwirbel 12 wird - während des Steig- und Sinkfluges eines Verkehrsflugzeuges - (im dem Hauptflügel 2 ausgefahrenen Zustand des Vorflügels 1) über die angrenzende Spaltströmung ständig mit Energie versorgt. Über eine sogenannte (fiktive) Trennstromlinie, die zwischen dem Wirbelströmungsgebiet und der Spaltströmung liegt, werden kontinuierlich Turbulenzballen in die beschleunigte Spaltströmung gelangen, wodurch dann der Lärm entsteht, insbesondere durch Abströmung der Turbulenzballen über die Oberkante 5 (obere Abströmkante) respektive obere Vorflügelhinterkante des Vorflügels 1.

Die Lösung mit einer flexibel gestalteten Trennfläche 6 nach der Fig. 1, die an der Unterkante 4 des Vorflügels 1 eingangs dessen konkaver Profilwölbung 3 angeordnet ist und aus mehreren seriell angeordneten Bürstenhaaren 7 besteht, welche über die Vorflügel-Spannweite verteilt sind, verfolgt nun einen einfacheren Weg. Anstatt der (bekanntermaßen als Trennfläche 6 vorgeschlagenen) starren Bleche, deren Anordnung man in der eingangs erläuterten DE 199 25 560 A1 nachsehen kann, welche an der Unterkante 4 des Vorflügels 1 drehbeweglich befestigt werden, deren Unterbringung (wegen der eingangs genannten Nachteile) im Reiseflug des Verkehrsflugzeuges (bei einem dem Hauptflügel 2 angelenkten Vorflügel 1) unlösbar scheint, oder anstatt eines den Innenbereich der Profilwölbung des Vorflügels 1 ausfüllenden aufblasbaren Verdrängungskörpers, der sowohl (ebenso wegen der eingangs genannten Nachteile) ein aufwendiges als auch störanfälliges Steuerungssystem sowie eine Anbindung an andere Flugzeugsysteme (Datenbus, Druckluft) erfordert, wird eine Lärmreduzierung durch den Einsatz von Bürsten (Bürstenhaaren 7) erreicht werden. Hierbei wird an der Unterkante 4 des Vorflügels 1 über die gesamte Vorflügel-Spannweite beispielsweise eine dünne Bürstenreihe derart angebracht, dass die (in der Fig. 2 gezeigten) Bürstenhaare 7 im Ruhezustand , also bei einem bodenstehenden Verkehrsflugzeug, der Verlängerung der unteren Außenkontur des Vorflügels 1 in Strömungsrichtung folgen.

Diese Anordnung nach der Fig. 1 findet man in der Fig. 2 mit einer Trennfläche 6 wieder, die aus mehreren seriell angeordneten Bürstenhaaren 7 zusammengesetzt ist und beispielsweise eine Bürstenhaarreihe bildet. Aus der Fig. 2 kann man ersehen, dass sich diese Bürstenhaare 7 im Flugzustand des Verkehrsflugzeuges nun selbstständig aufgrund ihrer Flexibilität den Windkräften folgend nach der Luftströmung ausrichten werden. Sie werden den gefangenen Luftwirbel 12 (wenigstens teilweise) abschotten und damit den geschilderten Energieaustausch unterbinden.

Eine mit Bürstenhaaren 7 umgesetzte flexible Trennfläche 6, die nach den Figuren 1 und 2 an der Unterkante 4 des Vorflügels 1 ausgangs der konkaven Profilwölbung 3 angeordnet ist, besitzt gegenüber einer starren (mit Blechen realisierten) auslenkbaren Trennfläche den Vorteil, dass die Bürstenhaare 7 sich den für verschiedene Fluganstellwinkel jeweils ergebenden unterschiedlichen Trennstromlinienkonturen unter der Wirkung des dynamischen Strömungsdrucks (im Spaltbereich 9) von selbst anpassen werden.

Weiterhin kann man an der Unterkante 4 (respektive der unteren Vorflügelhinterkante) eine bewegliche Anlenkung der Bürstenhaare 7 (der Bürstenhaarreihe), worauf später noch eingegangen wird, vorsehen, wodurch sich der Vorflügel 1 dann in der Reisekonfiguration problemlos einfahren lässt, weil sich die Bürstenhaare 7, sofern der Vorflügel 1 dem Hauptflügel 2 angelenkt wird, in dieser Situation dann dem Innenbereich der Profilwölbung des Vorflügels 1 (respektive der konkaven Vorflügelrückseite) anschmiegen werden.

Mit dieser Bürstenanordnung nach den Figuren 1 und 2 wird die Entstehung einer turbulenten, freien und damit instabilen Strömungsscherschicht weitestgehend verhindert und somit die ursächliche Lärmquellgröße im Sinne einer Minderung beeinflusst.

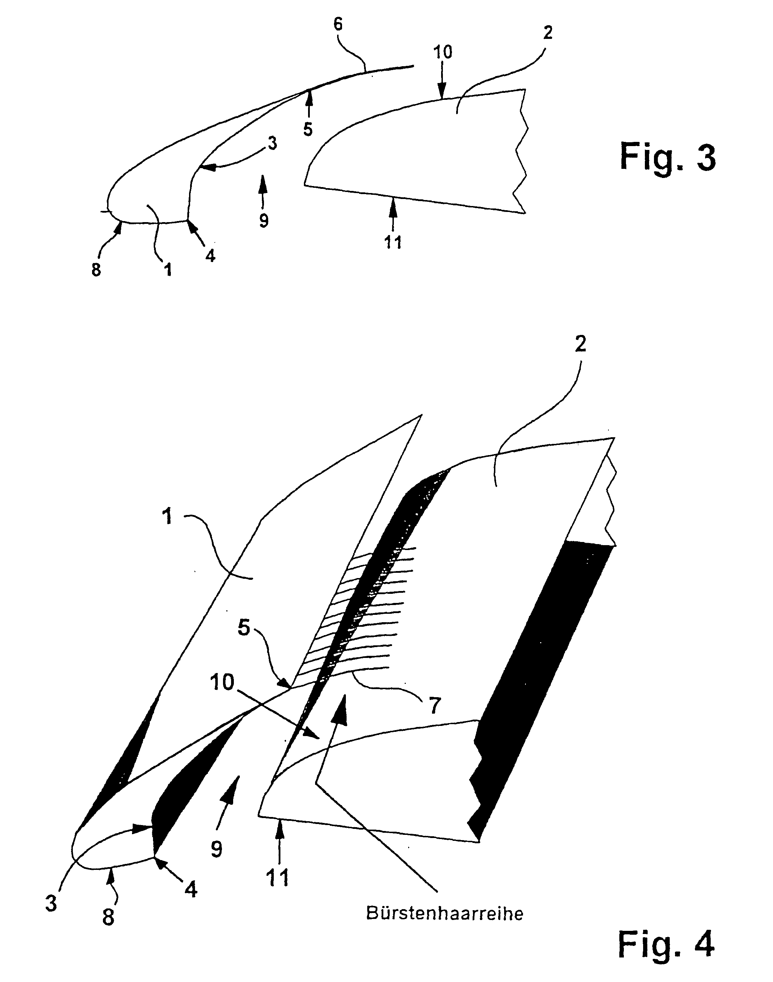

Anderenfalls kann man - nach dem Vorbild der Figuren 3 und 4 - die Trennfläche 6 mit mehreren seriell angeordneten Bürstenhaaren 7 (mit der genannten Bürstenhaarreihe) auch an der Oberkante 5 (respektive an der oberen Abströmkante) des Vorflügels 1 anbringen. Eine solche Anordnung bewirkt eine Verminderung der Abstrahlung von Kantenlärm, der bekanntlich infolge des Abströmens einer turbulenten Strömung über eine Flächenendkante entsteht (Umwandlung von hydrodynamischen Druckschwankungen in ausbreitungsfähigen Schalldruck). Eine Lärmminderung wird sich dadurch ergeben, dass die Diskontinuität des Ausgleichs der turbulenten Oberflächen-Druckschwankungen an der starren Kante infolge des endlichen Durchströmungswiderstandes der Bürstenkante (ähnlich dem Vorbild bei einer porösen Endkante) durch einen allmählichen Ausgleich der turbulenten Wechseldrücke in Strömungsrichtung ersetzt wird.

Zurückkommend auf die bewegliche Anlenkung dieser Bürstenhaare 7 oder dieser Bürstenhaarreihe, die (nach dem Vorbild der Figuren 1 und 2) an der Unterkante 4 (respektive an der unteren Abströmkante) des Vorflügels 1 eingangs der konkaven Profilwölbung 3 oder (nach dem Vorbild der Figuren 3 und 4) an der Oberkante 5 des Vorflügels 1 ausgangs der konkaven Profilwölbung 3 angeordnet sind und eine sogenannte Trennfläche 6 bilden, welche sich aus mehreren seriell angeordneten Bürstenhaaren 7 oder aus mehreren seriell angeordneten Bürstenhaarbüscheln, die aus mehreren Bürstenhaaren 7 definierter Anzahl gebündelt werden, zusammensetzt, wobei die Bürstenhaare 7 oder die Bürstenhaarreihe über unter- oder oberkantenseitig des Vorflügels 1 in Vorflügel-Spannweitenrichtung verteilt wenigstens einreihig (also auch zwei- oder mehrreihig wäre denkbar) angeordnet sind, wird folgendes fortgesetzt.

Die mit gereihten Bürsten(haaren 7 oder Bürstenhaarbüscheln) gebildete Trennfläche 6 ist an einem beweglich veränderbaren Trägerelement [der(allgemein bezeichneten) Bürsten], das sich entlang der Vorflügel-Spannweite erstreckt, befestigt. Dieses Trägerelement ist entsprechenden angetriebenen Führungselementen einer (figurlich nicht gezeigten und auch nicht näher erläuterten) Anlenkeinrichtung angeschlossen. Mit diesen Führungselementen der Anlenkeinrichtung lässt sich das Trägerelement, sofern der Vorflügel 1 dem Hauptflügel 2 ausgefahren ist, entweder retour zur konkaven Profilwölbung 3 oder anderenfalls nach einem Vorflügel-Außenbereich 8, der außerhalb dem von der Profilwölbung 3 und dem Hauptflügel 2 eingeschlossenen Spaltbereich 9 (Zwischenraum zwischen ausgefahrenem Vorflügel 1 und Hauptflügel 2) gelegen ist, anlerrken. Dadurch wird sich die Trennfläche 6 respektive werden sich die Bürstenhaare 7 entweder dem Innenbereich des Vorflügels 1 oder der Ober- oder Unterseite 10, 11 des Hauptflügels 2 zuwenden (und dort anliegen).

Anderenfalls ist das Trägerelement den entsprechenden Führungselementen, die durch die Kraft der Stellmotoren, die auch den Vorflügel 1 verfahren, angetrieben werden, angeschlossen, mit denen es in den Spaltbereich 9 (Zwischenraum) gedrückt wird, dermaßen, dass die Bürstenhaare 7, sofern der Vorflügel 1 dem Hauptflügel 2 angelenkt ist, zwischen dem angelenkten Vorflügel 1 und dem Hauptflügel 2 gelegen sind.

Hinsichtlich der beiden Anordnungen nach den Figuren 1 bis 4 bleibt zu ergänzen, dass die Bürstenhaare 7 an einer (figurlich nicht gezeigten) Stellfläche des Trägerelementes aufrecht stehend befestigt sind. Diese Bürstenhaare 7 können (wie vorerwähnt) - sofern aus vorteilhaften Gründen beabsichtigt - jeweils zu einem Bürstenhaarbüschel, von denen mehrere über die Vorflügelspannweite verteilt und wenigstens einreihig angeordnet sind, zusammengefasst werden. Mit der seriellen Anordnung der Bürstenhaare 7 oder den zusammengefassten Bürstenhaarbüscheln, die dicht nebeneinander positioniert sind, lässt sich nun eine Bürstenhaarreihe realisieren. Die Bürstenhaare 7 sollen dünn (dünnborstig) ausgebildet sein, welche damit dermaßen befähigt sind, dass sie im Flugzustand (Steig- oder Sinkflug) des Verkehrsflugzeuges (oder denkbar auch während dessen Rollbewegung mit Bodenkontakt) während verschiedener Fluganstellwinkel des Vorflügels 1 sich aufgrund ihrer Flexibilität den Windkräften folgend nach der Wirkung des aerodynamischen Strömungsdruckes einer Spaltluft-Strömung, die den Spaltbereich 9 durchströmen wird, selbständig ausrichten. Die Bürstenhaare 7 sind in definierter Dichte angeordnet, so dass die Diskontinuität des Ausgleichs der turbulenten Oberflächen-Druckschwankungen an der starren Hinterkante des Vorflügels 1 infolge des endlichen Durchströmungswiderstandes der Bürstenkante durch einen allmählichen Ausgleich der turbulenten Wechseldrücke in Strömungsrichtung ersetzt wird. Weiter sind die Bürstenhaare 7 mit einer Haardichte installiert, welche auch bei dicht positionierten Bürstenhaaren 7 oder -büscheln eine Luftdurchlässigkeit von Teilen der Spaltluft-Strömung ohne vollständige Abdichtung des konkav gewölbten Innenbereiches des Vorflügels 1 umsetzt, wonach durch die Bürstenhaare 7 noch ein Luftdruckausgleich umgesetzt wird.

Anknüpfend an die vorangestellten Ausführungen wird eine Anordnung zur Minderung des aerodynamischen Lärms an einem Vorflügel eines Verkehrsflugzeuges vorgestellt, die anhand einer ersten Ausführungsmöglichkeit (Figuren 1 und 2) und einer zweiten Ausführungsmöglichkeit (Figuren 3 und 4) erläutert wird. Dabei soll auch nicht unerwähnt bleiben, dass (nach der ersten Ausführungsmöglichkeit) an der Unterkante des Vorflügels 1 über die gesamte Spannweite eine dünne Bürstenreihe derart angebracht ist, dass die Bürstenhaare 7 im Ruhezustand (also bei stehendem Flugzeug) der Verlängerung der unteren Außenkontur des Vorflügels 1 in Strömungsrichtung folgen. Im Flugzustand werden sich diese Bürstenhaare 7 nun selbständig aufgrund ihrer Flexibilität den Windkräften folgend nach der Strömung ausrichten.

Der Fachmann wird nun auch bestrebt sein, die Schallquellstärken eines orginalen Hauptflügels 2 (ohne an der Ober- und / oder Unterkante eingangs der konkaven Profilwölbung 3 an den ausgefahrenen Vorflügel 1 angeordneten) Bürsten (seriell angeordneten Bürstenhaaren 7 oder Bürstenhaarbüscheln) und eines mit Bürsten modifizierten Vorflügels 1 genannter Konfiguration experimentell (wenigstens im Test) zu ermitteln, um seinen Erwartungen entsprechende Sicherheit zu verleihen. Dabei wird er bestrebt sein, mittels eines akustischen Hohlspiegels die Quellstärken und die Quellverteilung auf einem Schnitt eines Tragflügels in Landekonfiguration [also bei ausgefahrenem Vorflügel 1 und (der Vollständigkeit halber) bei ausgefahrener Landeklappe] messtechnisch zu erfassen. Man wird bei diesem Messverfahren einen Lärmpegelverlauf über den Traversierweg (Verfahrweg) erhalten, um den der Hohlspiegel verfahren wird. Die vorgenommenen Testreihen, durchgeführt an einem Modell im Maßstab 1 : 6, die nach den Figuren 5 bis 8 den positiven Ausgang von erwarteter Lärmminderung durch vorgenommene Versuchsreihen bestätigen, basieren auf einer geometrischen Anordnung mit den beiden wesentlichen Quellen, dem Vorflügel bei X = -320 mm und die Landeklappenseitenkante bei X = 60 mm; wobei die Angabe X" die Koordinate des Traversierweges bedeutet. In den Figuren 5 bis 8 werden die Quellstärken des Hauptflügels 2 im Orginalzustand ohne behandelten Vorflügel 1 mit einer ausgezogen Kurvenform und die Quellstärken des Hauptflügels 2 mit behandeltem Vorflügel 1 mit einer gestrichelten Kurvenform dargestellt. Die Figuren 5 bis 8 vermitteln nun diesem Fachmann für die Frequenzen 2,5 KHz, 3,15 KHz, 4 KHz und 5 KHz die beabsichtigte lärmmindernde Wirkung dieser modifizierten Flügelkonfiguration mit einem Reduktionspotential der Quellstärke von bis zu 15 dB.

Das erwartete Testergebnis bestätigt einerseits den Gedanken, dass die sich ausrichtenden Bürsten, die an der Ober- und / oder Unterkante eingangs der konkaven Profilwölbung 3 an den ausgefahrenen Vorflügel 1 angeordnet sind, bzw. die sich ausrichtende Schicht von Bürstenhaaren durch Abschirmung das Wirbelgebiet der konkav gewölbten Innenseite (des Vorflügels 1) hydrodynamisch von der Spaltströmung zwischen dem ausgefahrenen Vorflügel 1 und dem Hauptflügel 2 entkoppeln wird. Andererseits verhindert die Durchlässigkeit der Bürsten bzw. Bürstenhaare eine komplette Abdichtung, so dass noch ein Druckausgleich zwischen beiden Gebieten gewährleistet wird und somit keine Resonanzen und tonalen Effekte angefacht werden können.

Für den eingefahrenen Zustand des Vorflügels 1 an den Hauptflügel 2 im Reiseflug wird - wie vorher angedeutet - die ein- oder (denkbar auch) mehrreihig nebeneinander in Vorflügel-Spannweite mit seriell befestigten Bürstenhaaren 7 oder Bürstenhaarbüscheln [Bürstenhaarreihe(n)] ausgestattete Trennfläche 6, die an dem in Vorflügel-Spannweite sich erstreckenden und ober- oder unterkantenseitig des Vorflügels 1 und ein- oder ausgangs dessen konkaven Profilwölbung 3 beweglich veränderbaren Trägerelement befestigt ist, mittels einer einfachen Anlenkung des Trägerelementes dem ausgefahrenen Vorflügel 1 nach innen geklappt und durch die Kraft der Stellmotoren, die auch den Vorflügel 1 verfahren, in den Raum zwischen Vorflügel 1 und Hauptflügel 2 gedrückt, so dass sich das Trägerelement mit samt der Trennfläche 6 sich dem Innenbereich der konkaven Profilwölbung 3 des vollständig eingefahrenen (bzw. an den Hauptflügel 2 angelenkten) Vorflügels 1 sehr nahe liegen und anschmiegen wird. Gleichermaßen könnte vor dem beabsichtigten Einfahren des Vorflügels 1 in dieser Situation das Trägerelement samt der aus Bürsten(reihen) zusammengesetzten Trennfläche auch nach außerhalb dem Vorflügel 1 luftspaltentfernend (also nach unterhalb der Unterkante 4 oder nach oberhalb der Oberkante 5 des Vorflügels 1) geklappt werden, so dass sich die Bürstenhaare 7 im Endstadium an der Unter- oder Oberseite (an die Flügeloberfläche) des Hauptflügels 2 anlegen.

Der Fachmann wird resümieren, dass eine dermaßen am Vorflügel 1 beweglich veränderbar befestigte Trennfläche (Bürstenkante mit seriell befestigten Bürstenhaaren 7) gegenüber einer starren (dem Vorflügel 1auslenkbaren) Trennfläche (gemäß den einleitenden Ausführungen) den Vorteil aufweisen wird, dass sich die Bürstenhaare 7 den sich für verschiedene Fluganstellwinkel jeweils ergebenden, unterschiedlichen Trennstromlinienkonturen unter der Wirkung des dynamischen Strömungsdruckes von selbst anpassen. Weiterhin kann bei beweglicher Anlenkung der sogenannten Bürstenkante an der unteren Vorflügelhinterkante der Vorflügel 1 in die Reisekonfiguration problemlos eingefahren werden, da sich dann die Bürstenhaare 7 der konkaven Vorflügelrückseite anschmiegen können. Im Hinblick auf die technische Umsetzbarkeit wird die vorgestellte Anordnung (nach den Figuren 1 und 2) zur Minderung des aerodynamischen Lärms an einem Vorflügel 1 eines Verkehrsflugzeuges damit wesentlich attraktiver als die Anwendung starrer Trennflächen sein. Während diese Bürstenanordnung die Entstehung einer turbulenten, freien und damit instabilen Strömungsscherschicht weitgehend verhindert und somit die ursächliche Lärmquelle im Sinne einer Minderung beeinflusst, können derartige Bürstenkanten zur Lärmminderung auch an der oberen Abströmkante des Vorflügels 1 angebracht werden. Eine solche Anordnung (nach den Figuren 3 und 4) zur Minderung des aerodynamischen Lärms an einem Vorflügel 1 eines Verkehrsflugzeuges bewirkt eine Verminderung der Abstrahlung von Kantenlärm, der bekanntlich infolge des Abströmens einer turbulenten Strömung über eine Flächenendkante entsteht. Eine Lärmminderung ergibt sich dadurch, dass die Diskontinuität des Ausgleichs der turbulenten Oberflächen-Druckschwankungen an der starren Kante infolge des endlichen Durchströmungswiderstandes der Bürstenkante ersetzt wird durch einen allmählichen Ausgleich der turbulenten Wechseldrücke in Strömungsrichtung. Bürstenkanten an der unteren und / oder der oberen Vorflügelhinterkante können - wie vorgeschlagen - entweder jeweils allein oder auch in Kombination zur Lärmminderung herangezogen

Die Lärmminderungswirkung der Einzelmaßnahmen wird sich bei kombiniertem Einsatz addieren, da eine Bürste(nreihe) an der unteren Abströmkante die Quellgrößen vermindert, während die Bürste(nreihe) an der oberen Abströmkante den Abstrahlmechanismus im Sinne einer Lärmminderung maßgeblich beeinflusst.

## Patentansprüche

1. Anordnung zur Minderung des aerodynamischen Lärms an einem Vorflügel (1) eines Verkehrsflugzeuges, der beweglich an einen Hauptflügel (2) angelenkt und von diesem ausgefahren wird, dessen Innenbereich eine der Außenkontur des Hauptflügels angepasste Profilwölbung (3), die konkav gewölbt ist, aufweist, die in Vorflügel-Spannweitenrichtung die Form einer Hohlkehle besitzt, weiterhin an der Unterkante (4) des Vorflügels (1) eingangs der konkaven Profilwölbung (3) und / oder an der Oberkante (5) des Vorflügels (1) ausgangs der konkaven Profilwölbung (3) eine Trennfläche (6) angeordnet ist, **dadurch gekennzeichnet daß** die Trennfläche (6) aus mehreren seriell angeordneten Bürstenhaaren (7), welche über die Vorflügel-Spannweite verteilt und wenigstens einreihig angeordnet sind, zusammengesetzt ist.

2. Anordnung nach Anspruch 1, **dadurch gekennzeichnet, dass** die Trennfläche (6) an einem Trägerelement, das an der Unterkante (4) des Vorflügels (1) eingangs der konkaven Profilwölbung (3) oder an der Oberkante (5) des Vorflügels (1) ausgangs der konkaven Profilwölbung (3) beweglich veränderbar befestigt ist und sich entlang der Vorflügel-Spannweite erstreckt, angeordnet ist.

3. Anordnung nach den Ansprüchen 1 und 2, **dadurch gekennzeichnet, dass** das Trägerelement entsprechenden angetriebenen Führungselementen einer Anlenkeinrichtung angeschlossen ist, mit denen es sich, sofern der Vorflügel (1) dem Hauptflügel (2) ausgefahren ist, entweder zur Profilwölbung (3) oder nach einem Vorflügel-Außenbereich (8), der außerhalb dem von der Profilwölbung (3) und dem Hauptflügel (2) eingeschlossenen Spaltbereich (9) (Zwischenraum) gelegen ist, anlenken lässt, so dass sich die Bürstenhaare (7) entweder dem Innenbereich des Vorflügels (1) oder der Ober- oder Unterseite (10, 11) des Hauptflügels (2) zuwenden (und dort anliegen) werden, oder anderenfalls das Trägerelement den entsprechenden Führungselementen angeschlossen ist, die durch die Kraft der Stellmotoren, die auch den Vorflügel (1) verfahren, angetrieben werden, mit denen es in den Spaltbereich (9) (Zwischenraum) gedrückt wird, so dass die Bürstenhaare (7), sofern der Vorflügel (1) dem Hauptflügel (2) angelenkt ist, zwischen dem Vorflügel (1) und dem Hauptflügel (2) gelegen sind.

4. Anordnung nach den Ansprüchen 1 und 2, **dadurch gekennzeichnet, dass** die Bürstenhaare (7) an einer Stellfläche des Trägerelementes aufrecht stehend befestigt sind, die jeweils zu einem Bürstenhaarbüschel, von denen mehrere über die Vorflügelspannweite verteilt und wenigstens einreihig angeordnet sind, zusammengefasst sind.

5. Anordnung nach den Ansprüchen 1 und 4, **dadurch gekennzeichnet, dass** mit der seriellen Anordnung der Bürstenhaare (7) oder den zusammengefassten Bürstenhaarbüscheln, die dicht nebeneinander positioniert sind, eine Bürstenhaarreihe realisiert ist.

6. Anordnung nach Anspruch 1, **dadurch gekennzeichnet, dass** die Bürstenhaare (7) dünn ausgebildet sind, welche dermaßen befähigt sind, dass sie im Flugzustand des Verkehrsflugzeuges während verschiedener Fluganstellwinkel des Vorflügels (1) sich aufgrund ihrer Flexibilität den Windkräften folgend nach der Wirkung des aerodynamischen Strömungsdruckes einer Spaltluft-Strömung, die den Spaltbereich (9) durchströmen wird, selbstständig ausrichten.

7. Anordnung nach Anspruch 1, **dadurch gekennzeichnet, dass** die Bürstenhaare (7) in definierter Dichte angeordnet sind, so dass die Diskontinuität des Ausgleichs der turbulenten Oberflächen-Druckschwankungen an der starren Hinterkante des Vorflügels (1) infolge des endlichen Durchströmungswiderstandes der Bürstenkante durch einen allmählichen Ausgleich der turbulenten Wechseldrücke in Strömungsrichtung ersetzt wird.

8. Anordnung nach den Ansprüchen 4 bis 7, **dadurch gekennzeichnet, dass** die Bürstenhaare (7) mit einer Haardichte installiert sind, welche auch bei dicht positionierten Bürstenhaaren (7) oder -büscheln eine Luftdurchlässigkeit von Teilen der Spaltluft-Strömung ohne vollständige Abdichtung des konkav gewölbten Innenbereiches des Vorflügels (1) umsetzt, wonach durch die Bürstenhaare (7) noch ein Luftdruckausgleich umgesetzt wird.

## Claims

1. Arrangement for reducing the aerodynamic noise at a slat (1) of a commercial aircraft, which slat is articulated movably to a main wing (2) and extended from this, the inner area of which has a profile curvature (3) that is matched to the outer contour of the main wing, which curvature is concave and has the form of a channel in the direction of the slat span width, furthermore a parting plane (6) is arranged at the lower edge (4) of the slat (1) at the start of the concave profile curvature (3) and/or at the upper edge (5) of the slat (1) at the end of the concave profile curvature (3), **characterized in that** the parting plane (6) is composed of several brush hairs (7) arranged in series, which are distributed over the slat span width and arranged at least in a single row.

2. Arrangement according to claim 1, **characterized in that** the parting plane (6) is arranged on a support element, which is fastened in a movably variable manner to the lower edge (4) of the slat (1) at the start of the concave profile curvature (3) or to the upper edge (5) of the slat (1) at the end of the concave profile curvature (3) and extends along the slat span width.

3. Arrangement according to claims 1 and 2, **characterized in that** the support element is connected to corresponding driven guide elements of an articulated device, with which elements the support element, if the slat (1) is extended from the main wing (2), can be linked either to the profile curvature (3) or following a slat outer area (8), which is situated outside the gap area (9) (interstice) enclosed by the profile curvature (3) and the main wing (2), so that the brush hairs (7) will face (and lie against) either the inner area of the slat (1) or the upper or lower side (10, 11) of the main wing, or on the other hand the support element is connected to the corresponding guide elements, which are driven by the power of the servo-motors, which also move the slat (1), with which elements the support element is pressed into the gap area (9) (interstice), so that the brush hairs (7), if the slat (1) is articulated to the main wing (2), are situated between the slat (1) and the main wing (2).

4. Arrangement according to claims 1 and 2, **characterized in that** the brush hairs (7) are fastened standing upright on a positioning surface of the support element, which hairs are combined respectively to form a brush hair bundle, several of which are distributed over the slat span width and arranged at least in a single row.

5. Arrangement according to claims 1 and 4, **characterized in that** a brush hair row is realized with the serial arrangement of the brush hairs (7) or the combined brush hair bundles, which are positioned closely adjacent to one another.

6. Arrangement according to claim 1, **characterized in that** the brush hairs (7) are formed thin and are so capable that in the flying mode of the commercial aircraft during various flight angles of incidence of the slat (1) they orient themselves independently on account of their flexibility following the wind forces to the effect of the aerodynamic flow pressure of a slotted air flow that will flow through the gap area (9).

7. Arrangement according to claim 1, **characterized in that** the brush hairs (7) are arranged in a defined density, so that the discontinuity in the equalization of the turbulent surface pressure variations at the rigid trailing edge of the slat (1) is replaced as a result of the finite flow resistance of the brush edge by a gradual equalization of the turbulent alternating pressures in the flow direction.

8. Arrangement according to claims 4 to 7, **characterized in that** the brush hairs (7) are installed with a hair density that realizes an air permeability of portions of the slotted air flow without complete sealing of the concavely curved inner area of the slat (1) even with closely positioned brush hairs (7) or bundles, according to which air pressure equalization is still realized by the brush hairs (7).

## Revendications

1. Système de réduction du bruit aérodynamique contre un bec de bord d'attaque (1) d'un avion de tourisme articulé de manière mobile contre une aile principale (2) et déployé à partir de cette aile, dont la partie interne présente une flèche de courbure du profil (3) adaptée au contour extérieur de l'aile principale, concave et qui, dans la direction d'écartement du bec de bord d'attaque, a la forme d'une cannelure, une surface de séparation (6) ayant été disposée contre l'arête inférieure (4) du bec de bord d'attaque (1), au début de la flèche de courbure du profil concave (3) et / ou contre l'arête supérieure (5) du bec de bord d'attaque (1), à la sortie de la flèche de courbure du profil concave (3), **caractérisé en ce que** la surface de séparation (6) est constituée de plusieurs poils de brosse disposés en série (7) et sur au moins une seule rangée, sur toute la portée du bec de bord d'attaque.

2. Système selon la revendication 1, **caractérisé en ce que** la surface de séparation (6) a été disposée contre un élément porteur fixé de manière à pouvoir bouger, contre l'arête inférieure (4) du bec de bord d'attaque (1) , au début de la flèche de courbure du profil concave (3) ou contre l'arête supérieure (5) du bec de bord d'attaque (1), à la sortie de la flèche de courbure du profil concave et s'étendant le long de la portée du bec de bord d'attaque.

3. Système selon les revendications 1 et 2, **caractérisé en ce que** l'élément porteur a été raccordé à des éléments de guidage entraînés correspondants d'un dispositif d'articulation, éléments avec lesquels l'élément peut, si le bec de bord d'attaque (1) est déployé de l'aile principale (2), être articulé vers la flèche de courbure du profil (3) ou vers un segment extérieur (8) du bec de bord d'attaque situé à l'extérieur de la zone fendue (9) confinée entre la flèche de courbure du profil (3) et l'aile principale (2), de telle sorte que les poils de brosse (7) se tournent soit vers le segment intérieur du bec de bord d'attaque (1), soit vers les faces supérieure et inférieure (10, 11) de l'aile principale (2) (et y reposent), ou, à défaut, de telle sorte que l'élément porteur soit raccordé aux éléments de guidage correspondants, entraînés par la force des moteurs de commande qui entraînent également le bec de bord d'attaque (1), et avec lesquels l'élément porteur est comprimé jusque dans la zone fendue (9) (espace intermédiaire), de telle sorte que les poils de brosse (7), si le bec de bord d'attaque (1) est articulé par rapport à l'aile principale (2), soit situé entre le bec de bord d'attaque (1) et l'aile principale (2).

4. Système selon les revendications 1 et 2, **caractérisé en ce que** les poils de brosse (7) ont été fixés verticalement contre une surface de réglage de l'élément porteur et rassemblés systématiquement en une gerbe de poils de brosse, plusieurs de ces gerbes étant réparties sur la portée du bec de bord d'attaque et disposées au moins sur une rangée.

5. Système selon les revendications 1 et 4, **caractérisé en ce qu'**une rangée de poils de brosse a été réalisée avec la disposition sérielle des poils de brosse (7) ou avec les gerbes de poils positionnées très près les unes des autres.

6. Système selon la revendication 1, **caractérisé en ce que** les poils de brosse (7) sont fins et, du fait de leur flexibilité, peuvent, lorsque l'avion de tourisme est en situation de vol et lorsque les angles d'incidence de vol du bec de bord d'attaque (1) diffèrent, s'orienter de façon autonome, en fonction de la force des vents et sous l'effet de la pression aérodynamique d'un écoulement d'air par la fente, écoulement qui traversera la zone fendue (9).

7. Système selon la revendication 1, **caractérisé en ce que** les poils de brosse (7) ont été disposés selon une densité définie, de telle sorte que la discontinuité de compensation des variations de pression contre l'arête postérieure rigide du bec de bord d'attaque (1) soit, à cause de la résistance finale de l'arête de la brosse à l'écoulement continu, remplacée par une compensation progressive des pressions alternatives turbulentes dans la direction d'écoulement.

8. Système selon les revendications 4 à 7, **caractérisé en ce que** les poils de brosse (7) ont été installés avec une densité capillaire telle que, même lorsque les poils (7) ou pinceaux de brosse sont proches les uns des autres, certaines parties de l'écoulement d'air par la fente laissent passer l'air, sans que l'étanchéité du segment intérieur concave soit parfaite, une nouvelle compensation de pression de l'air étant ensuite réalisée.
